(19) Europäisches Patentamt / European Patent Office / Office européen des brevets

(11) **EP 3 808 544 A1**

(12) **EUROPÄISCHE PATENTANMELDUNG**

(43) Veröffentlichungstag:
**21.04.2021 Patentblatt 2021/16**

(21) Anmeldenummer: **19202933.8**

(22) Anmeldetag: **14.10.2019**

(51) Int Cl.:
**B29C 70/20** (2006.01)    **B29C 70/22** (2006.01)
**B29C 70/50** (2006.01)    **B32B 5/26** (2006.01)
**B32B 5/28** (2006.01)

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Covestro Deutschland AG**
**51373 Leverkusen (DE)**

(72) Erfinder: **Die Erfindernennung liegt noch nicht vor**

(74) Vertreter: **Levpat**
**c/o Covestro AG**
**Gebäude 4825**
**51365 Leverkusen (DE)**

(54) **DIREKT-IMPRÄGNIERUNGS PROZESS**

(57) Ein Verfahren zur Herstellung eines Mehrschichtverbundwerkstoffes enthaltend mindestens zwei flächig und stoffschlüssig übereinander liegende Lagen Verbundwerkstoff, wobei die mindestens eine erste Lage Verbundwerkstoff Endlosfasern enthält, wobei die Endlosfasern innerhalb dieser mindestens einen Lage unidirektional ausgerichtet sind und in einem auf Homopolycarbonat und/oder Copolycarbonat basierenden Kunststoff eingebettet sind, und die mindestens eine zweite Lage Verbundwerkstoff ein textiles Flächengebilde enthält, wobei das textile Flächengebilde in einem auf Homopolycarbonat und/oder Copolycarbonat basierenden Kunststoff eingebettet ist, einen entsprechend hergestellten Mehrschichtverbundwerkstoff, einen Mehrschichtverbundwerkstoff enthaltend mindestens zwei flächig und stoffschlüssig übereinander liegende Lagen Verbundwerkstoff, wobei die mindestens eine erste Lage Verbundwerkstoff Endlosfasern enthält, wobei die Endlosfasern innerhalb dieser mindestens einen Lage unidirektional ausgerichtet sind und in einem auf Homopolycarbonat und/oder Copolycarbonat basierenden Kunststoff eingebettet sind, und die mindestens eine zweite Lage Verbundwerkstoff ein textiles Flächengebilde enthält, wobei das textile Flächengebilde in einem auf Homopolycarbonat und/oder Copolycarbonat basierenden Kunststoff eingebettet ist und dessen Verwendung.

EP 3 808 544 A1

**Beschreibung**

Die vorliegende Erfindung betrifft ein Verfahren zur Herstellung eines Mehrschichtverbundwerkstoffes enthaltend mindestens zwei flächig und stoffschlüssig übereinander liegende Lagen Verbundwerkstoff, wobei die mindestens eine erste Lage Verbundwerkstoff Endlosfasern enthält, wobei die Endlosfasern innerhalb dieser mindestens einen Lage unidirektional ausgerichtet sind und in einem auf Homopolycarbonat und/oder Copolycarbonat basierenden Kunststoff eingebettet sind, und die mindestens eine zweite Lage Verbundwerkstoff ein textiles Flächengebilde enthält, wobei das textile Flächengebilde in einem auf Homopolycarbonat und/oder Copolycarbonat basierenden Kunststoff eingebettet ist, mindestens umfassend die folgenden Schritte (A) Bereitstellen mindestens einer ersten Lage Verbundwerkstoff enthaltend Endlosfasern, wobei die Endlosfasern innerhalb dieser mindestens einen ersten Lage unidirektional ausgerichtet sind und in einem auf Homopolycarbonat und/oder Copolycarbonat basierenden Kunststoff eingebettet sind, wobei der Faservolumenanteil der mindestens einen ersten Lage Verbundwerkstoff 10 bis 45 Vol.-% beträgt, (B) flächiges Aufbringen mindestens eines textilen Flächengebildes auf die mindestens eine erste Lage Verbundwerkstoff aus Schritt (A), um ein Halbzeug enthaltend mindestens eine erste Lage Verbundwerkstoff und mindestens ein textiles Flächengebilde zu erhalten, und (C) Verpressen des Halbzeugs aus Schritt (B) bei einem Druck von 2 bis 40 bar(a), einer Temperatur T von 220 bis 320 °C für eine Zeit von 30 bis 600 s, um den Mehrschichtverbundwerkstoff mit einem Faservolumenanteil von 25 bis 55 Vol.-% zu erhalten.

Die vorliegende Erfindung betrifft des Weiteren einen entsprechenden Mehrschichtverbundwerkstoff, ein Teil für den Einsatz im Automobilbereich, in Gepäckstücken, in Möbeln, in bzw. an Fahrrädern, in Sportausrüstungen, als Verstärkungselemente in Bekleidung, in elektronischen Geräten oder in Gehäuseteilen, welche geeignet sind für die Verwendung als oder den Einsatz in einem Gehäuse eines elektronischen Geräts, wobei die genannten Teile mindestens einen erfindungsgemäßen Mehrschichtverbundwerkstoff, die Verwendung des erfindungsgemäßen Mehrschichtverbundwerkstoffs und ein Verfahren zur Herstellung eines solchen Teils.

In den letzten Jahren besteht insbesondere auf dem Gebiet der transportablen elektronischen Geräte, wie beispielsweise Mobiltelefone, Laptops oder Tablets, der Trend, immer leichtere und dünnere Geräte herzustellen. Dies erfordert unter anderem die Entwicklung von extrem leichten und dünnen Gehäusen, die gleichzeitig eine hohe mechanische Stabilität aufweisen müssen, um beispielsweise Bildschirm und Elektronik des Geräts zu schützen. Als Stand der Technik für solche Zwecke haben sich mittlerweile z.B. Magnesium-Aluminium-Legierungen etabliert. Vorteilhaft an Gehäusen aus solchen Metalllegierungen sind ihr leichtes Gewicht und ihre hohe mechanische Stabilität. Darüber hinaus werden derartige Metallgehäuse vom Verbraucher auch als ästhetisch ansprechend und hochwertig empfunden. Gehäuse aus herkömmlichem Plastik werden vom Verbraucher dahingegen als eher minderwertig empfunden und können auch im Hinblick auf die mechanischen Eigenschaften nicht mit den Metalllegierungen konkurrieren. Letztere haben allerdings den gravierenden Nachteil, dass sie aus kostenintensiven Rohstoffen in aufwendigen und energieintensiven Verfahren hergestellt werden müssen, was mit hohen Herstellungskosten verbunden ist. Auch im Hinblick auf die Ressourcenschonung wäre es wünschenswert, gleichwertige Ersatzmaterialien für die im Stand der Technik verwendeten Metalllegierungen zu entwickeln.

Aus dem Stand der Technik sind zahlreiche Faserverbundwerkstoffe und Verfahren zu deren Herstellung bekannt. WO 2013/098224 A1 beschreibt ein Verfahren zur Herstellung eines Faserverbundwerkstoffs in Form eines kunststoffimprägnierten Breitfaserbandes und eine aus Abschnitten des Breitfaserbandes erhältliche Mehrschichtverbundstruktur. Als Kunststoffmatrix können sowohl duroplastische als auch thermoplastische Kunststoffe verwendet werden. DE 10 2012 200 059 A1 beschreibt einen faserverstärkten Mehrschichtverbundwerkstoff, dessen Kunststoffmatrix ein thermoplastischer Kunststoff ist. Allerdings sind die aus dem Stand der Technik bekannten Mehrschichtverbundwerkstoffe hinsichtlich ihrer optischen, klanglichen, haptischen und mechanischen Eigenschaften stark verbesserungswürdig, insbesondere, wenn es darum geht, sich den Eigenschaften von Gehäusen aus Metalllegierungen weiter anzunähern.

Ausgehend von dem voranstehend erläuterten Stand der Technik bestand eine Aufgabe der vorliegenden Erfindung darin, ein neues Material bereit zu stellen, das metallähnliche Aussehen, metallähnlichen Klang, metallähnliche Haptik und metallähnliche mechanische Eigenschaften aufweist und als Gehäuseteilmaterial für ein Gehäuse eines elektronischen Geräts geeignet ist. Hierfür sollte das Material darüber hinaus leichtgewichtig sein und sich kostengünstig herstellen lassen. Es wäre ferner wünschenswert, wenn das Material eine möglichst glatte und optisch ansprechende Oberfläche hätte. Des Weiteren soll ein Verfahren zur Herstellung des neuen Materials bereitgestellt werden, welches sich durch eine besonders vorteilhafte Kombination der einzelnen Verfahrensparameter auszeichnet, so dass sich das neue Material einfach, effizient und in möglichst hoher und gleichbleibender Qualität herstellen lässt.

Diese Aufgaben werden gelöst durch das erfindungsgemäße Verfahren zur Herstellung eines Mehrschichtverbundwerkstoffes enthaltend mindestens zwei flächig und stoffschlüssig übereinander liegende Lagen Verbundwerkstoff, wobei die mindestens eine erste Lage Verbundwerkstoff Endlosfasern enthält, wobei die Endlosfasern innerhalb dieser mindestens einen Lage unidirektional ausgerichtet sind und in einem auf Homopolycarbonat und/oder Copolycarbonat basierenden Kunststoff eingebettet sind, und die mindestens eine zweite Lage Verbundwerkstoff ein textiles Flächengebilde enthält, wobei das textile Flächengebilde in einem auf Homopolycarbonat und/oder Copolycarbonat basierenden Kunststoff eingebettet ist, mindestens umfassend die folgenden Schritte:

(A) Bereitstellen mindestens einer ersten Lage Verbundwerkstoff enthaltend Endlosfasern, wobei die Endlosfasern innerhalb dieser mindestens einen ersten Lage unidirektional ausgerichtet sind und in einem auf Homopolycarbonat und/oder Copolycarbonat basierenden Kunststoff eingebettet sind, wobei der Faservolumenanteil der mindestens einen ersten Lage Verbundwerkstoff 10 bis 45 Vol.-% beträgt,

(B) flächiges Aufbringen mindestens eines textilen Flächengebildes auf die mindestens eine erste Lage Verbundwerkstoff aus Schritt (A), um ein Halbzeug enthaltend mindestens eine erste Lage Verbundwerkstoff und mindestens ein textiles Flächengebilde zu erhalten, und

(C) Verpressen des Halbzeugs aus Schritt (B) bei einem Druck von 2 bis 40 bar(a), einer Temperatur T von 220 bis 320 °C für eine Zeit von 30 bis 600 s, um den Mehrschichtverbundwerkstoff mit einem Faservolumenanteil von 25 bis 55 Vol.-% zu erhalten.

Die Aufgaben werden des Weiteren gelöst durch einen erfindungsgemäßen Mehrschichtverbundwerkstoffs enthaltend mindestens zwei flächig und stoffschlüssig übereinander liegende Lagen Verbundwerkstoff, wobei die mindestens eine erste Lage Verbundwerkstoff Endlosfasern enthält, wobei die Endlosfasern innerhalb dieser mindestens einen Lage unidirektional ausgerichtet sind und in einem auf Homopolycarbonat und/oder Copolycarbonat basierenden Kunststoff eingebettet sind, und die mindestens eine zweite Lage Verbundwerkstoff ein textiles Flächengebilde enthält, wobei das textile Flächengebilde in einem auf Homopolycarbonat und/oder Copolycarbonat basierenden Kunststoff eingebettet ist, ein erfindungsgemäßes Teil für den Einsatz im Automobilbereich, in Gepäckstücken, als Verstärkungselemente in Bekleidung, in elektronischen Geräten oder Gehäuseteilen, welche geeignet sind für die Verwendung als oder den Einsatz in einem Gehäuse eines elektronischen Geräts, wobei die genannten Teile mindestens einen erfindungsgemäßen Mehrschichtverbundwerkstoff aufweisen, die erfindungsgemäße Verwendung des erfindungsgemäßen Mehrschichtverbundwerkstoffs und das erfindungsgemäße Verfahren zur Herstellung eines solchen Teils.

Die vorliegende Erfindung wird im Folgenden detailliert beschrieben.

Schritt (A) des erfindungsgemäßen Verfahrens umfasst das Bereitstellen mindestens einer ersten Lage Verbundwerkstoff enthaltend Endlosfasern, wobei die Endlosfasern innerhalb dieser mindestens einen ersten Lage unidirektional ausgerichtet sind und in einem auf Homopolycarbonat und/oder Copolycarbonat basierenden Kunststoff eingebettet sind, wobei der Faservolumenanteil der mindestens einen ersten Lage Verbundwerkstoff 10 bis 45 Vol.-%, bevorzugt 15 bis 30 Vol.-%, besonders bevorzugt 17 bis 29 Vol.-%, beträgt.

Der Begriff "Endlosfaser" ist im Sinne der Erfindung als Abgrenzung zu den dem Fachmann ebenfalls bekannten Kurz- oder Langfasern zu verstehen. Endlosfasern erstrecken sich in der Regel über die gesamte Länge der Lage Verbundwerkstoff. Der Begriff Endlosfaser leitet sich davon ab, dass diese Fasern auf einer Rolle aufgewickelt vorliegen und während der Herstellung der einzelnen Verbundwerkstofflagen bevorzugt abgewickelt und mit Kunststoff imprägniert werden, so dass, mit Ausnahme von gelegentlichem Bruch oder Rollenwechsel, ihre Länge üblicherweise im Wesentlichen mit der Länge der hergestellten Verbundwerkstofflage übereinstimmt.

In der mindestens einen ersten Lage liegen erfindungsgemäß Endlosfasern vor. Erfindungsgemäß bevorzugt sind die vorliegenden Endlosfasern ausgewählt aus der Gruppe bestehend aus Glasfasern, Carbonfasern, Basaltfasern, Kunststofffasern, Spezialfasern und Mischungen davon, insbesondere Carbonfasern.

Weiter bevorzugt sind die als Endlosfasern eingesetzten Kunststofffasern ausgewählt aus der Gruppe bestehend aus Liquid-Crystal-Polymer-Fasern, Aramidfasern, Polyphenylensulfid-Fasern, Polyetherketon-Fasern, Polyetheretherketon-Fasern, Polyetherimid-Fasern und Mischungen davon.

Es hat sich für bestimmte Ausführungsformen der Erfindung als bevorzugt erwiesen, Endlosfasern, insbesondere Carbonfasern, mit einem E-Modul von größer 240 GPa, bevorzugt größer 245 GPa, besonders bevorzugt von 250 GPa oder mehr einzusetzen. Solche Kohlenstofffasern sind beispielsweise unter der Bezeichnung Pyrofil von der Firma Mitsubishi Rayon CO., LtD. im Handel erhältlich. Praktische Versuche haben gezeigt, dass sich diese Carbonfasern durch eine besonders gute Spreizbarkeit bei der Verarbeitung zu einer erfindungsgemäßen Verbundwerkstofflage auszeichnen.

In der mindestens einen ersten Lage liegen die vorliegenden Endlosfasern unidirektional ausgerichtet vor. Im Rahmen der vorliegenden Erfindung bedeutet "unidirektional", dass die Endlosfasern im Wesentlichen der Länge nach in eine Richtung zeigen und damit die gleiche Laufrichtung aufweisen. Mit "im Wesentlichen unidirektional" ist hier gemeint, dass eine Abweichung der Faserlaufrichtung von bis zu 5% möglich ist. Bevorzugt beträgt die Abweichung der Faserlaufrichtung jedoch deutlich unter 3%, besonders bevorzugt deutlich unter 1%.

Die in Schritt (A) des erfindungsgemäßen Verfahrens eingesetzte mindestens eine erste Lage weist im Allgemeinen eine Dicke von 30 bis 1000 $\mu$m, bevorzugt 50 bis 500 $\mu$m, besonders bevorzugt 80 bis 300 $\mu$m, auf.

**EP 3 808 544 A1**

Die in Schritt (A) des erfindungsgemäßen Verfahrens mindestens eine erste Lage weist im Allgemeinen einen Fasergehalt von 10 bis 45 Vol.-%, bevorzugt 15 bis 30 Vol.-%, besonders bevorzugt 17 bis 29 Vol.-%, auf.

Die erfindungsgemäß eingesetzte mindestens eine erste Lage kann mit den üblichen dem Fachmann bekannten Verfahren zur Herstellung von Faserverbundwerkstoffen hergestellt werden.

Gemäß einer bevorzugten Ausführungsform der Erfindung ist die erste Lage Verbundwerkstoff herstellbar durch Auftragen eines geschmolzenen auf Polycarbonat basierenden Kunststoffs auf ein vorgeheiztes Endlos-Faserband unter Druck-Scher-Vibrationsbeaufschlagung. Ein derartiges Herstellungsverfahren ist in DE 10 2011 005 462 B3 beschrieben. Unter einem Endlos-Faserband wird erfindungsgemäß eine Mehrzahl von zusammengeführten Rovings verstanden, wobei es sich bei den Rovings um Bündel aus vielen Endlosfasern ohne Drall handelt.

Die mindestens eine erste Lage Verbundwerkstoff kann im Allgemeinen in allen dem Fachmann bekannten Größen und Formen vorgelegt werden. Die mindestens eine erste Lage, die in Schritt (A) des erfindungsgemäßen Verfahrens bereitgestellt wird, ist beispielsweise eckig, rund oder komplex geformt. In einer bevorzugten Ausführungsform ist die mindestens eine erste Lage rechteckig geformt.

Die mindestens eine erste Lage, die in Schritt (A) des erfindungsgemäßen Verfahrens bereitgestellt wird, weist beispielsweise eine Fläche von 1 bis 5000 $m^2$, bevorzugt 10 bis 1000 $m^2$, auf.

Als ein auf Polycarbonat basierender Kunststoff wird im Rahmen der vorliegenden Erfindung ein Kunststoff verstanden, der mindestens 50 Gew.-%, vorzugsweise mindestens 60 Gew.-%, bevorzugt mindestens 70 Gew.-%, insbesondere mindestens 80 Gew.-%, besonders bevorzugt mindestens 90 Gew.-%, ganz besonders bevorzugt mindestens 95 Gew.-%, insbesondere mindestens 97 Gew.-%, Polycarbonat enthält. Anders ausgedrückt kann ein auf Polycarbonat basierender Kunststoff im Rahmen der vorliegenden Erfindung höchstens 50 Gew.-%, vorzugsweise höchstens 40 Gew.-%, bevorzugt höchstens 30 Gew.-%, insbesondere höchstens 20 Gew.-%, besonders bevorzugt höchstens 10 Gew.-%, ganz besonders bevorzugt höchstens 5 Gew.-%, insbesondere höchstens 3 Gew.-%, einen oder mehrere von Polycarbonat verschiedene Kunststoffe als Blendpartner enthalten.

Gemäß einer besonderen Ausführungsform besteht der auf Polycarbonat basierende Kunststoff im Wesentlichen, insbesondere zu 70 bis 99 Gew.-%, bevorzugt 95 bis 99 Gew.-%, aus Polycarbonat, wobei neben dem Polycarbonat geringe Mengen Zuschlagstoffe wie UV-Stabilisatoren und/oder Flammschutzmittel vorliegen können.

Wenn im Rahmen der vorliegenden Erfindung von Polycarbonat die Rede ist, so sind damit auch Mischungen verschiedener Polycarbonate gemeint. Ferner wird Polycarbonat hier als Oberbegriff verwendet und umfasst damit sowohl Homopolycarbonate als auch Copolycarbonate. Die Polycarbonate können ferner in bekannter Weise linear oder verzweigt sein.

Gemäß einer besonderen Ausführungsform der Erfindung besteht der auf Polycarbonat basierende Kunststoff zu 70 Gew.-%, 80 Gew.-%, 90 Gew.-% oder im Wesentlichen, insbesondere zu 100 Gew.-%, aus einem linearen Polycarbonat.

Die Herstellung der Polycarbonate kann in bekannter Weise aus Diphenolen, Kohlensäurederivaten, gegebenenfalls Kettenabbrechern und Verzweigern erfolgen.

Einzelheiten der Herstellung von Polycarbonaten sind dem Fachmann seit mindestens etwa 40 Jahren gut bekannt. Beispielhaft sei hier auf Schnell, Chemistry and Physics of Polycarbonates, Polymer Reviews, Volume 9, Interscience Publishers, New York, London, Sydney 1964, auf D. Freitag, U. Grigo, P.R. Müller, H. Nouvertné, BAYER AG, Polycarbonates in Encyclopedia of Polymer Science and Engineering, Volume 11, Second Edition, 1988, Seiten 648 bis 718 und auf U. Grigo, K. Kirchner und P.R. Müller Polycarbonate in Becker Braun, Kunststoff-Handbuch, Band 31, Polycarbonate, Polyacetale, Polyester, Celluloseester, Carl Hanser Verlag München, Wien 1992, Seiten 117 bis 299 verwiesen.

Die Herstellung aromatischer Polycarbonate erfolgt z.B. durch Umsetzung von Diphenolen mit Kohlensäurehalogeniden, vorzugsweise Phosgen, und/oder mit aromatischen Dicarbonsäuredihalogeniden, vorzugsweise Benzoldicarbonsäuredihalogeniden, nach dem Phasen-Grenzflächenverfahren, gegebenenfalls unter Verwendung von Kettenabbrechern und gegebenenfalls unter Verwendung von trifunktionellen oder mehr als trifunktionellen Verzweigern. Ebenso ist eine Herstellung über ein Schmelzepolymerisationsverfahren durch Umsetzung von Diphenolen mit beispielsweise Diphenylcarbonat möglich. Für die Herstellung der Polycarbonate geeignete Diphenole sind beispielsweise Hydrochinon, Resorcin, Dihydroxydiphenyle, Bis-(hydroxyphenyl)-alkane, Bis-(hydroxyphenyl)-cycloalkane, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide, α-α'-Bis-(hydroxyphenyl)-diisopropylbenzole, Phtalimidine abgeleitet von Isatin- oder Phenolphthaleinderivaten sowie deren kernalkylierte, kernarylierte und kernhalogenierte Verbindungen.

Vorzugsweise werden bei den Diphenolen auf der Basis von Phthalimiden, wie beispielsweise 2-Aralkyl-3,3'-Bis-(4-hydroxyphenyl)-phthalimide oder 2-Aryl-3,3'-Bis-(4-hydroxyphenyl)-phthalimide wie 2-Phenyl-3,3'-Bis-(4-hydroxyphenyl)-phthalimid, 2-Alkyl-3,3'-Bis-(4-hydroxyphenyl)-phthalimide, wie 2-Butyl-3,3'-Bis-(4-hydroxyphenyl)-phthalimide, 2-Propyl-3,3'-Bis-(4-hydroxyphenyl)-phthalimide, 2-Ethyl-3,3'-Bis-(4-hydroxyphenyl)-phthalimide oder 2-Methyl-3,3'-Bis-(4-hydroxyphenyl)-phthalimide sowie Diphenolen auf der Basis von am Stickstoff substituierten Isatinen wie 3,3-Bis(4-hydroxyphenyl)-1-phenyl-1H-indol-2-on oder 2,2-Bis(4-hydroxyphenyl)-1-phenyl-1H-indol-3-on eingesetzt.

Bevorzugte Diphenole sind 4,4'-Dihydroxydiphenyl, 2,2-Bis-(4-hydroxyphenyl)-propan (Bisphenol A), 2,4-Bis-(4-hydroxyphenyl)-2-methylbutan, 1,1-Bis-(4-hydroxyphenyl)-p-diisopropylbenzol, 2,2-Bis-(3-methyl-4-hydroxyphenyl)-propan, Dimethyl-Bisphenol A, Bis-(3,5-dimethyl-4-hydroxyphenyl)-methan, 2,2-Bis-(3,5-dimethyl-4-hydroxyphenyl)-propan, Bis-(3,5-dimethyl-4-hydroxyphenyl)-sulfon, 2,4-Bis-(3,5-dimethyl-4-hydroxyphenyl)-2-methylbutan, 1,1-Bis-(3,5-dimethyl-4-hydroxyphenyl)-p-diisopropylbenzol und 1,1-Bis-(4-hydroxyphenyl)-3,3,5-trimethylcyclohexan.

Besonders bevorzugte Diphenole sind 2,2-Bis-(4-hydroxyphenyl)-propan (Bisphenol A), 2,2-Bis-(3,5-dimethyl-4-hydroxyphenyl)-propan, 1,1-Bis-(4-hydroxyphenyl)-cyclohexan, 1,1-Bis-(4-hydroxyphenyl)-3,3,5-trimethylcyclohexan und Dimethyl-Bisphenol A.

Diese und weitere geeignete Diphenole sind z.B. in US-A 3 028 635, US-A 2 999 825, USA 3 148 172, US-A 2 991 273, US-A 3 271 367, US-A 4 982 014 und US-A 2 999 846, in DE-A 1 570 703, DE-A 2063 050, DE-A 2 036 052, DE-A 2 211 956 und DE-A 3 832 396, in FR-A 1 561 518, in der Monographie H. Schnell, Chemistry and Physics of Polycarbonates, Interscience Publishers, New York 1964 sowie in JP-A 620391986, JP-A 620401986 und JP-A 1055501986 beschrieben.

Im Fall der Homopolycarbonate wird nur ein Diphenol eingesetzt, im Fall der Copolycarbonate werden mehrere Diphenole eingesetzt.

Geeignete Kohlensäurederivate sind beispielsweise Phosgen oder Diphenylcarbonat.

Geeignete Kettenabbrecher, die bei der Herstellung der Polycarbonate eingesetzt werden können, sind Monophenole. Geeignete Monophenole sind beispielsweise Phenol selbst, Alkylphenole wie Kresole, p-tert.-Butylphenol, Cumylphenol, sowie deren Mischungen.

Bevorzugte Kettenabbrecher sind die Phenole, welche ein- oder mehrfach mit C1- bis C30-Alkylresten, linear oder verzweigt, bevorzugt unsubstituiert, oder mit tert-Butyl substituiert sind. Besonders bevorzugte Kettenabbrecher sind Phenol, Cumylphenol und/oder p-tert-Butylphenol. Die Menge an einzusetzendem Kettenabbrecher beträgt bevorzugt 0,1 bis 5 Mol-%, bezogen auf Mole an jeweils eingesetzten Diphenolen. Die Zugabe der Kettenabbrecher kann vor, während oder nach der Umsetzung mit einem Kohlensäurederivat erfolgen.

Geeignete Verzweiger sind die in der Polycarbonatchemie bekannten tri- oder mehr als trifunktionellen Verbindungen, insbesondere solche mit drei oder mehr als drei phenolischen OH-Gruppen.

Geeignete Verzweiger sind beispielsweise 1,3,5-Tri-(4-hydroxyphenyl)-benzol, 1,1,1-Tri-(4-hydroxyphenyl)-ethan, Tri-(4-hydroxyphenyl)-phenylmethan, 2,4-Bis-(4-hydroxyphenylisopropyl)-phenol, 2,6-Bis-(2-hydroxy-5'-methyl-benzyl)-4-methylphenol, 2-(4-Hydroxyphenyl)-2-(2,4-dihydroxyphenyl)-propan, Tetra-(4-hydroxyphenyl)-methan, Tetra-(4-(4-hydroxyphenylisopropyl)-phenoxy)-methan und 1,4-Bis-((4',4-dihydroxytriphenyl)-methyl)-benzol und 3,3-Bis-(3-methyl-4-hydroxyphenyl)-2-oxo-2,3-dihydroindol.

Die Menge der gegebenenfalls einzusetzenden Verzweiger beträgt bevorzugt 0,05 Mol-% bis 3,00 Mol-%, bezogen auf Mole an jeweils eingesetzten Diphenolen. Die Verzweiger können entweder mit den Diphenolen und den Kettenabbrechern in der wässrig alkalischen Phase vorgelegt werden oder in einem organischen Lösungsmittel gelöst vor der Phosgenierung zugegeben werden. Im Fall des Umesterungsverfahrens werden die Verzweiger zusammen mit den Diphenolen eingesetzt.

Besonders bevorzugte Polycarbonate sind das Homopolycarbonat auf Basis von Bisphenol A, das Homopolycarbonat auf Basis von 1,3-Bis-(4-hydroxyphenyl)-3,3,5-trimethylcyclohexan und die Copolycarbonate auf Basis der beiden Monomere Bisphenol A und 1,1-Bis-(4-hydroxyphenyl)-3,3,5-trimethylcyclohexan.

Des Weiteren können auch Copolycarbonate Verwendung finden. Zur Herstellung dieser Copolycarbonate können 1 bis 25 Gew.-%, vorzugsweise 2,5 bis 25 Gew.-%, besonders bevorzugt 2,5 bis 10 Gew.-%, bezogen auf die Gesamtmenge an einzusetzenden Diphenolen, Polydiorganosiloxane mit Hydroxyaryloxy-Endgruppen eingesetzt werden. Diese sind bekannt (US 3,419,634, US-PS 3,189,662, EP 0 122 535, US 5,227,449) und nach literaturbekannten Verfahren herstellbar. Ebenfalls geeignet sind Polydiorganosiloxanhaltige Copolycarbonate; die Herstellung der Polydiorganosiloxanhaltiger Copolycarbonate ist beispielsweise in der DE-A 3 334 782 beschrieben.

Die Polycarbonate können alleine oder als Mischung von Polycarbonaten vorliegen. Es ist auch möglich das Polycarbonat oder die Mischung von Polycarbonaten gemeinsam mit einem oder mehreren von Polycarbonat verschiedenen Kunststoffen als Blendpartner einzusetzen.

Als Blendpartner lassen sich Polyamide, Polyester, insbesondere Polybutylenterephthalat und Polyethylenterephthalat, Polylactid, Polyether, thermoplastisches Polyurethan, Polyacetal, Fluorpolymer, insbesondere Polyvinylidenfluorid, Polyethersulfone, Polyolefin, insbesondere Polyethylen und Polypropylen, Polyimid, Polyacrylat, insbesondere Poly(methyl)methacrylat, Polyphenylenoxid, Polyphenylensulfid, Polyetherketon, Polyaryletherketon, Styrolpolymerisate, insbesondere Polystyrol, Styrolcopolymere, insbesondere Styrolacrylnitrilcopolymer, Acrylnitrilbutadienstyrolblockcopolymere und Polyvinylchlorid einsetzen.

Zusätzlich sind optional bis zu 30,0 Gew.-%, bevorzugt 10,0 Gew.-%, besonders bevorzugt 0,10 bis 8,0 Gew.-%, ganz besonders bevorzugt 0,2 bis 3,0 Gew.-% sonstige übliche Additive enthalten.

Erfindungsgemäß geeignete Additive sind beispielsweise ausgewählt aus der Gruppe bestehend aus Flammschutzmitteln, Antitropfmitteln, Thermostabilisatoren, Entformungsmitteln, Antioxidantien, UV-Absorbern, IR-Absorbern, Antistatika, optischen Aufhellern, Lichtstreumitteln, Farbmitteln wie Pigmente, auch anorganische Pigmente, Ruß und/oder Farbstoffe, anorganischen Füllstoffen und Mischungen davon. Diese Additive können einzeln oder auch im Gemisch zugesetzt werden.

Solche Additive, wie sie üblicherweise bei Polycarbonaten zugesetzt werden, sind beispielsweise in EP-A 0 839 623, WO-A 96/15102, EP-A 0 500 496 oder "Plastics Additives Handbook", Hans Zweifel, 5th Edition 2000, Hanser Verlag, München beschrieben.

Erfindungsgemäß bevorzugt eingesetzte auf Homopolycarbonat und/oder Copolycarbonat basierende Kunststoffe weisen im Allgemeinen eine Schmelzviskosität auf, die eine gute Verarbeitbarkeit gemäß der vorliegenden Erfindung gewährleistet. In einer bevorzugten Ausführungsform weisen die eingesetzten auf Homopolycarbonat und/oder Copolycarbonat basierenden Kunststoffe eine Schmelzviskosität von < 1000 Pa·s, weiter bevorzugt < 800 Pa·s, besonders bevorzugt < 600 Pa·s, auf. Die angegebenen Viskositäten beziehen sich auf Polymertemperaturen von 280 °C, bei verwendeten Scherraten < 50 1/s und können durch Hochdruckkapillarrheometer gemäß der ISO 11443-2014 ermittelt werden.

Erfindungsgemäß bevorzugt eingesetzte auf Homopolycarbonat und/oder Copolycarbonat basierende Kunststoffe weisen im Allgemeinen ein Molekulargewicht auf, das eine gute Verarbeitbarkeit gemäß der vorliegenden Erfindung gewährleistet. In einer bevorzugten Ausführungsform weisen die eingesetzten auf Homopolycarbonat und/oder Copolycarbonat basierenden Kunststoffe ein Massenmittel der Molmasse $M_w$ von < 29 kg/mol, bevorzugt 17 bis 29 kg/mol, weiter bevorzugt von < 27 kg/mol, bevorzugt 18 bis 27 kg/mol, besonders bevorzugt < 25 kg/mol, bevorzugt 19 bis 25 kg/mol, auf. Das Molekulargewicht kann mit Gelpermeationschromatographie ermittelt werden.

Die in Schritt (A) des erfindungsgemäßen Verfahrens eingesetzte erste erfindungsgemäße Lage weist Endlosfasern auf, die innerhalb der Lage unidirektional ausgerichtet sind und in einem auf Polycarbonat basierenden Kunststoff eingebettet sind. Die Endlosfasern erstrecken sich dabei insbesondere im Wesentlichen über die gesamte Länge der Lage Verbundwerkstoff.

Die in Schritt (A) des erfindungsgemäßen Verfahrens bereitgestellte mindestens eine erste Lage kann symmetrisch oder asymmetrisch aufgebaut sein. "Symmetrisch" bedeutet in diesem Zusammenhang, dass die vorhandenen Endlosfasern von beiden Seiten in im Wesentlichen gleichen Mengen eines auf Polycarbonat basierenden Kunststoffes eingebettet sind. "Asymmetrisch" bedeutet in diesem Zusammenhang, dass die vorhandenen Endlosfasern von beiden Seiten mit unterschiedlichen Mengen eines auf Polycarbonat basierenden Kunststoffes eingebettet sind, so dass die Endlosfasern näher an der Oberfläche der einen Seite der ersten Lage liegen als an der Oberfläche der anderen Seite der ersten Lage, siehe dazu auch EP 2 788 408 A1.

In einer bevorzugten Ausführungsform werden in Schritt (A) des erfindungsgemäßen Verfahrens 2, 3, 4 oder mehr erste Lagen, insbesondere übereinander liegend, bereitgestellt. In dieser bevorzugten Ausführungsform können die in den 2, 3, 4 oder mehr ersten Lagen vorliegenden unidirektional ausgerichteten Endlosfasern entweder in die gleiche Richtung orientiert sein, d.h. der Winkel zwischen Endlosfasern aus zwei übereinander liegenden ersten Lagen beträgt im Wesentlichen 0°, oder die unidirektional orientierten Endlosfasern der einzelnen ersten Lagen sind nicht, zumindest nicht alle, in die gleiche Richtung orientiert, d.h. der Winkel zwischen Endlosfasern aus zwei entsprechenden verschiedenen ersten Lagen beträgt im Wesentlichen nicht 0°.

Beispielsweise können die Endlosfasern in den ersten Lagen um 30°, 40°, 50°, 60°, 70°, 80°, 90°, 100°, 110°, 120°, 130° gegeneinander rotiert sein. Dabei kann die Orientierung in jedem Fall um ±5°, bevorzugt um ±3°, besonders bevorzugt um ±1° von den genannten Richtwerten abweichen.

Besonders bevorzugt werden in Schritt (A) des erfindungsgemäßen Verfahrens 2, 3, 4 oder mehr erste Lagen vorgelegt, wobei die unidirektional orientierten Endlosfasern der benachbarten Lagen bevorzugt einen Winkel von 30 bis 130°, besonders bevorzugt 60 bis 120°, ganz besonders bevorzugt 80 bis 100°, beispielsweise 80°, 90° oder 100°, zueinander bilden.

Werden in Schritt (A) des erfindungsgemäßen Verfahrens mehr als eine erste Lage Verbundwerkstoff bereitgestellt, so können die einzelnen Lagen im Wesentlichen gleich oder unter-schiedlich, bevorzugt im Wesentlichen gleich, aufgebaut sein.

Unter einem im Wesentlichen gleichen Aufbau der Lagen Verbundwerkstoff wird im Rahmen der Erfindung verstanden, dass mindestens ein Merkmal aus der Gruppe chemische Zusammensetzung, Faservolumengehalt und Schichtdicke gleich ist. Unter chemischer Zusammensetzung werden erfindungsgemäß die chemische Zusammensetzung der Kunststoffmatrix des Verbundwerkstoffs und/oder die chemische Zusammensetzung der Endlosfasern verstanden.

Schritt (B) des erfindungsgemäßen Verfahrens umfasst das flächige Aufbringen mindestens eines textilen Flächengebildes auf die mindestens eine erste Lage Verbundwerkstoff aus Schritt (A), um ein Halbzeug enthaltend mindestens eine erste Lage Verbundwerkstoff und mindestens ein textiles Flächengebilde zu erhalten.

Das in Schritt (B) des erfindungsgemäßen Verfahrens aufgebrachte mindestens eine textile Flächengebilde kann im Allgemeinen jedes dem Fachmann bekannte textile Flächengebilde sein.

Erfindungsgemäß bevorzugt ist das erfindungsgemäße vorliegende textile Flächengebilde ausgewählt aus der Gruppe bestehend aus Geweben, Gelegen, Vließen, Geflechten, Maschenwaren, Gewirken und Kombination davon. Erfindungsgemäß bevorzugt wird als textiles Flächengebilde ein Gewebe eingesetzt.

Die Dicke des erfindungsgemäß eingesetzten Gewebes beträgt im Allgemeinen 30 bis 1000 $\mu$m, bevorzugt 100 bis 500 $\mu$m, besonders bevorzugt 200 bis 400 $\mu$m.

Im Allgemeinen weist das erfindungsgemäß eingesetzte Gewebe ein Flächengewicht von 50 bis 300 g/m$^2$, bevorzugt 120 bis 280 g/m$^2$, besonders bevorzugt 150 bis 250 g/m$^2$, auf.

Das erfindungsgemäß eingesetzte textile Flächengebilde, insbesondere das Gewebe, kann im Allgemeinen aus jedem dem Fachmann bekannten Material bestehen bzw. dieses enthalten, so lange es eine genügend hohe Kompatibilität mit dem eingesetzten auf Homopolycarbonat und/oder Copolycarbonat basierenden Kunststoff aufweist. Bevorzugte Materialien sind ausgewählt aus der Gruppe bestehend aus Glasfasern, Carbonfasern, Basaltfasern, Kunststofffasern, Spezialfasern und Mischungen davon, insbesondere Carbonfasern.

Weiter bevorzugt sind die in Geweben eingesetzten Kunststofffasern ausgewählt aus der Gruppe bestehend aus Liquid-Crystal-Polymer-Fasern, Aramidfasern, Polyphenylensulfid-Fasern, Polyetherketon-Fasern, Polyetheretherketon-Fasern, Polyetherimid-Fasern und Mischungen davon.

Bevorzugt weist das erfindungsgemäß eingesetzte textile Flächengebilde, insbesondere das Gewebe, an der Oberfläche der einzelnen Fasern ein dem Fachmann bekanntes "Sizing" auf, welches beispielsweise die Verarbeitbarkeit und/oder die Wechselwirkung mit dem Matrixmaterial verbessert.

Erfindungsgemäß ist es auch möglich und bevorzugt, dass die mindestens eine erste Lage Verbundwerkstoff über der mindestens einen zweiten Lage Verbundwerkstoff flächig und stoffschlüssig angeordnet ist und auf der mindestens einen ersten Lage Verbundwerkstoff mindestens eine dritte Lage Verbundwerkstoff flächig und stoffschlüssig angeordnet ist, und die mindestens eine dritte Lage Verbundwerkstoff ein textiles Flächengebilde enthält, wobei das textile Flächengebilde in einem auf Homopolycarbonat und/oder Copolycarbonat basierenden Kunststoff eingebettet ist.

In dieser Ausführungsform liegt neben der mindestens einen ersten Lage und der mindestens einen zweiten Lage mindestens eine dritte Lage Verbundwerkstoff vor, die ein textiles Flächengebilde enthält, wobei das textile Flächengebilde in einem auf Homopolycarbonat und/oder Copolycarbonat basierenden Kunststoff eingebettet ist. Geeignete und bevorzugte textile Flächengebilde und Kunststoffe sind bereits genannt worden und gelten hier entsprechend.

Zur Herstellung dieses bevorzugten erfindungsgemäßen Mehrschichtverbundwerkstoffes wird daher in Schritt (B) des erfindungsgemäßen Verfahrens mindestens ein textiles Flächengebilde auf die mindestens eine erste Lage Verbundwerkstoff aus Schritt (A) und mindestens ein weiteres textiles Flächengebilde auf die gegenüberliegende Seite der mindestens einen ersten Lage flächig aufgebracht, um ein Halbzeug enthaltend mindestens eine erste Lage Verbundwerkstoff, mindestens ein textiles Flächengebilde auf der einen Seite der mindestens einen ersten Lage und mindestens ein weiteres textiles Flächengebilde auf der gegenüberliegenden Seite der mindestens einen ersten Lage zu erhalten. Erfindungsgemäß können die textilen Flächengebilde und/oder die ersten Lagen gleich oder unterschiedlich sein, bevorzugt sind sie gleich.

In einer weiteren bevorzugten Ausführungsform betrifft die vorliegende Erfindung den erfindungsgemäßen Mehrschichtverbundwerkstoff, wobei die mindestens eine erste Lage Verbundwerkstoff über der mindestens einen zweiten Lage Verbundwerkstoff flächig und stoffschlüssig angeordnet ist und unter der mindestens einen zweiten Lage Verbundwerkstoff mindestens eine weitere erste Lage Verbundwerkstoff flächig und stoffschlüssig angeordnet ist. In dieser Ausführungsform liegt neben der mindestens einen ersten Lage und der mindestens einen zweiten Lage mindestens eine weitere erste Lage Verbundwerkstoff vor.

Zur Herstellung dieses bevorzugten erfindungsgemäßen Mehrschichtverbundwerkstoffes wird daher in Schritt (B) des erfindungsgemäßen Verfahrens mindestens ein textiles Flächengebilde zwischen mindestens zwei erste Lagen Verbundwerkstoff aus Schritt (A) flächig angebracht, um ein Halbzeug enthaltend mindestens ein textiles Flächengebilde zwischen mindestens zwei ersten Lagen, zu erhalten. Erfindungsgemäß können die textilen Flächengebilde und/oder die ersten Lagen gleich oder unterschiedlich sein, bevorzugt sind sie gleich.

Erfindungsgemäß werden in Schritt (B) des erfindungsgemäßen Verfahrens die mindestens eine erste Lage und das mindestens eine textile Flächengebilde flächig aufgebracht. "Flächig" bedeutet im Rahmen der vorliegenden Erfindung, dass die jeweiligen Lagen mindestens mit 60%, bevorzugt mindestens mit 70%, besonders bevorzugt mit mindestens 80%, insbesondere bevorzugt mit mindestens 90%, ganz besonders bevorzugt mit mindestens 95%, ihrer jeweiligen Flächen in Kontakt sind.

Gegebenenfalls in Schritt (B) des erfindungsgemäßen Verfahrens weitere Materiallagen zwischen den vorhandenen Schichten, insbesondere zwischen der mindestens einen ersten Lage und dem mindestens einen textilen Flächengebilde befinden. Beispielhaft seien hier weitere Lagen aus Kunststoff, der gleich oder verschieden von der in den Lagen verwendeten Kunststoffmatrix sein kann, genannt. Diese Kunststofflagen können insbesondere auch Füllstoffe, die von den erfindungsgemäß vorgesehenen Endlosfasern verschieden sind, enthalten. Ferner können auch Klebstoff-, Gewebe-, Vlies- oder Oberflächenvergütungslagen, beispielsweise Lackschichten im erfindungsgemäßen Mehrschichtverbundwerkstoff enthalten sein. Diese weiteren Lagen können zwischen innen- und außenliegenden Lagen, zwischen mehreren innenliegenden Lagen und/oder auf einer oder beiden der außenliegenden Lagen enthalten sein. Schritt (B) umfasst daher bevorzugt, dass entsprechende zusätzliche Lagen auf die mindestens eine erste Lage und/oder das mindestens eine textile Flächengebilde flächig aufgebracht werden.

Das nach Schritt (B) des erfindungsgemäßen Verfahrens erhaltene Halbzeug weist mindestens eine erste Lage und mindestens ein textiles Flächengebilde auf, die flächig aufeinander liegen. Bevorzugt wird dieses Halbzeug direkt in Schritt (C) des erfindungsgemäßen Verfahrens überführt, ohne dass weitere Verfahrensschritte erfolgen.

Schritt (C) des erfindungsgemäßen Verfahrens umfasst das Verpressen des Halbzeugs aus Schritt (B) bei einem Druck von 2 bis 40 bar(a), einer Temperatur T von 220 bis 320 °C für eine Zeit von 30 bis 600 s, um den Mehrschichtverbundwerkstoff mit einem Faservolumenanteil von 25 bis 55 Vol.-% zu erhalten.

Schritt (C) des erfindungsgemäßen Verfahrens kann im Allgemeinen in jeder dem Fachmann als geeignet erscheinenden Vorrichtung erfolgen, insbesondere in einer Intervallheißpresse, einer Doppelbandpresse oder in einer statischen Presse.

Insbesondere um die Außenseiten des erfindungsgemäßen Mehrschichtverbundwerkstoffs, insbesondere in Schritt (C), zu schützen, ist es bevorzugt, die Außenseiten des in Schritt (B) erhaltenen Halbzeugs vor Schritt (C) zu schützen. Dies kann erfindungsgemäß erfolgen, indem mindestens ein Trennfilm, mindestens einer Trennschicht, mindestens einem Trenngewebe oder eine Kombination von zwei oder mehreren davon flächig aufgebracht wird.

Die vorliegenden Erfindung betrifft daher bevorzugt das erfindungsgemäße Verfahren, wobei vor Schritt (C) an den Außenseiten des Halbzeugs jeweils mindestens ein Trennfilm, mindestens eine Trennschicht, mindestens ein Trenngewebe oder eine Kombination von zwei oder mehreren davon flächig aufgebracht wird. Beispiele für geeignete Trennschichten sind Glasfasergewebe, welche bevorzugt mit hochtemperaturbeständigen Kunststoffen, beispielsweise PTFE, beschichtet sind, chemisch behandelte oder beschichtete Stahlbänder, hochtemperaturbeständige Kunststofffolien, Trennpapiere, beispielsweise ein Papier oder mit mindestens einem Silikon beschichtetes Papier.

In einer bevorzugten Ausführungsform wird an den Außenseiten des Halbzeugs bevorzugt eine Trennschicht, beispielsweise ein Papier oder mit mindestens einem Silikon beschichtetes Papier, flächig aufgebracht.

Schritt (C) des erfindungsgemäßen Verfahrens erfolgt im Allgemeinen bei einem Druck von 2 bis 40 bar(a), bevorzugt 3 bis 30 bar(a), besonders bevorzugt 5 bis 20 bar(a).

Schritt (C) des erfindungsgemäßen Verfahrens erfolgt im Allgemeinen bei einer Temperatur T von 220 bis 320 °C, bevorzugt 240 bis 300 °C, besonders bevorzugt 270 bis 290 °C.

Schritt (C) des erfindungsgemäßen Verfahrens erfolgt im Allgemeinen für eine Zeit von 30 bis 600 s, bevorzugt 120 bis 300 s, besonders bevorzugt 180 bis 220 s.

Besonders bevorzugt erfolgt Schritt (C) des erfindungsgemäßen Verfahrens bei einem Druck von 5 bis 20 bar(a), einer Temperatur T von 270 bis 290 °C für eine Zeit von 120 bis 300 s, weiter bevorzugt 180 bis 220 s.

In einer besonders bevorzugten Ausführungsform des erfindungsgemäßen Verfahrens erfolgt Schritt (C) in einer Intervallheißpresse, in der das zu verpressende Halbzeug für eine bestimmte Zeit, bevorzugt für 1 bis 20 s, besonders bevorzugt 3 bis 15 s, mit dem oben genannten Druck beaufschlagt wird, dann wird die Presse geöffnet und das zu verpressende Halbzeug wird eine bestimmte Strecke, beispielsweise 5 bis 50 mm, bevorzugt 10 bis 40 mm, vorgeschoben und anschließend wieder mit dem genannten Druck beaufschlagt. Dieser Vorgang wird 10 bis 40 Mal, bevorzugt 12 bis 35 Mal, wiederholt, so dass sich die Presszeiten im Wesentlichen zu den oben genannten Zeiten addieren. Die Vorschubgeschwindigkeit dieser Bewegung beträgt im Allgemeinen 1 bis 25 m/h, bevorzugt 5 bis 20 m/h.

Nach Schritt (C) wird der erfindungsgemäße Mehrschichtverbundwerkstoff erhalten. An Schritt (C) des erfindungsgemäßen Verfahrens können sich noch übliche Reinigungs- und Aufarbeitungsschritte anschließen, beispielsweise Entfernen der gegebenenfalls vorliegenden Trennschicht etc., Reinigung der Oberflächen und/oder Zuschneiden des Produktes.

Die vorliegende Erfindung betrifft auch den erfindungsgemäßen Mehrschichtverbundwerkstoff, herstellbar nach dem erfindungsgemäßen Verfahren.

Die vorliegende Erfindung betrifft des Weiteren auch einen Mehrschichtverbundwerkstoff enthaltend mindestens zwei flächig und stoffschlüssig übereinander liegende Lagen Verbundwerkstoff, wobei die mindestens eine erste Lage Verbundwerkstoff Endlosfasern enthält, wobei die Endlosfasern innerhalb dieser mindestens einen Lage unidirektional ausgerichtet sind und in einem auf Homopolycarbonat und/oder Copolycarbonat basierenden Kunststoff eingebettet sind, und die mindestens eine zweite Lage Verbundwerkstoff ein textiles Flächengebilde enthält, wobei das textile Flächengebilde in einem auf Homopolycarbonat und/oder Copolycarbonat basierenden Kunststoff eingebettet ist.

Details und bevorzugte Ausführungsformen zu dem auf Homopolycarbonat und/oder Copolycarbonat basierenden Kunststoff werden weiter oben bezüglich des erfindungsgemäßen Verfahrens bereits offenbart und gelten hier entsprechend.

In der mindestens einen ersten Lage liegen erfindungsgemäß Endlosfasern vor. Erfindungsgemäß bevorzugt sind die vorliegenden Endlosfasern ausgewählt aus der Gruppe bestehend aus Glasfasern, Carbonfasern, Basaltfasern, Kunststofffasern, Spezialfasern und Mischungen davon, insbesondere Carbonfasern.

Weiter bevorzugt sind die als Endlosfasern eingesetzten Kunststofffasern ausgewählt aus der Gruppe bestehend aus Liquid-Crystal-Polymer-Fasern, Aramidfasern, Polyphenylensulfid-Fasern, Polyetherketon-Fasern, Polyetheretherketon-Fasern, Polyetherimid-Fasern und Mischungen davon.

Es hat sich für bestimmte Ausführungsformen der Erfindung als bevorzugt erwiesen, Endlosfasern, insbesondere Carbonfasern, mit einem E-Modul von größer 240 GPa, bevorzugt größer 245 GPa, besonders bevorzugt von 250 GPa oder mehr einzusetzen. Solche Kohlenstofffasern sind beispielsweise unter der Bezeichnung Pyrofil von der Firma Mitsubishi Rayon CO., LtD. im Handel erhältlich. Praktische Versuche haben gezeigt, dass sich diese Carbonfasern durch eine besonders gute Spreizbarkeit bei der Verarbeitung zu einer erfindungsgemäßen Verbundwerkstofflage auszeichnen.

In der mindestens einen ersten Lage liegen die vorliegenden Endlosfasern unidirektional ausgerichtet vor. Im Rahmen der vorliegenden Erfindung bedeutet "unidirektional", dass die Endlosfasern im Wesentlichen der Länge nach in eine Richtung zeigen und damit die gleiche Laufrichtung aufweisen. Mit "im Wesentlichen unidirektional" ist hier gemeint, dass eine Abweichung der Faserlaufrichtung von bis zu 5% möglich ist. Bevorzugt beträgt die Abweichung der Faserlaufrichtung jedoch deutlich unter 3%, besonders bevorzugt deutlich unter 1%.

In dem erfindungsgemäßen Mehrschichtverbundwerkstoff weist die mindestens eine erste Lage im Allgemeinen eine Dicke von 30 bis 1000 $\mu$m, bevorzugt 50 bis 500 $\mu$m, besonders bevorzugt 80 bis 300 $\mu$m, auf.

Die mindestens eine erste Lage des erfindungsgemäßen Mehrschichtverbundwerkstoffs weist im Allgemeinen einen Fasergehalt von 10 bis 45 Vol.-%, bevorzugt 15 bis 30 Vol.-%, besonders bevorzugt 17 bis 29 Vol.-%, auf.

In dem erfindungsgemäßen Mehrschichtverbundwerkstoff weist die mindestens eine zweite Lage im Allgemeinen eine Dicke von 30 bis 1500 $\mu$m, bevorzugt 50 bis 1000 $\mu$m, besonders bevorzugt 150 bis 400 $\mu$m, auf.

Die mindestens eine zweite Lage des erfindungsgemäßen Mehrschichtverbundwerkstoffs weist im Allgemeinen einen Fasergehalt von 25 bis 55 Vol.-%, bevorzugt 35 bis 50 Vol.-%, auf.

Das in der erfindungsgemäß vorliegenden mindestens einen zweiten Lage vorhandene textile Flächengebilde kann im Allgemeinen aus allen dem Fachmann als geeignet erscheinenden textilen Flächengebilden ausgewählt sein, insbesondere ist das textile Flächengebilde ein Gewebe. Details und bevorzugte Ausführungsformen zu dem vorliegenden textilen Flächengebilde werden weiter oben bezüglich des erfindungsgemäßen Verfahrens bereits offenbart und gelten hier entsprechend.

In einer bevorzugten Ausführungsform betrifft die vorliegende Erfindung den erfindungsgemäßen Mehrschichtverbundwerkstoff, wobei die mindestens eine erste Lage Verbundwerkstoff über der mindestens einen zweiten Lage Verbundwerkstoff flächig und stoffschlüssig angeordnet ist und auf der mindestens einen ersten Lage Verbundwerkstoff mindestens eine dritte Lage Verbundwerkstoff flächig und stoffschlüssig angeordnet ist, und die mindestens eine dritte Lage Verbundwerkstoff ein textiles Flächengebilde enthält, wobei das textile Flächengebilde in einem auf Homopolycarbonat und/oder Copolycarbonat basierenden Kunststoff eingebettet ist.

In dieser Ausführungsform liegt neben der mindestens einen ersten Lage und der mindestens einen zweiten Lage mindestens eine dritte Lage Verbundwerkstoff vor, die ein textiles Flächengebilde enthält, wobei das textiles Flächengebilde in einem auf Homopolycarbonat und/oder Copolycarbonat basierenden Kunststoff eingebettet ist. Geeignete und bevorzugte textile Flächengebilde und Kunststoffe sind bereits zu der zweiten erfindungsgemäßen Lage Verbundwerkstoff genannt worden und gelten hier entsprechend.

In einer weiteren bevorzugten Ausführungsform betrifft die vorliegende Erfindung den erfindungsgemäßen Mehrschichtverbundwerkstoff, wobei die mindestens eine erste Lage Verbundwerkstoff über der mindestens einen zweiten Lage Verbundwerkstoff flächig und stoffschlüssig angeordnet ist und unter der mindestens einen zweiten Lage Verbundwerkstoff mindestens eine weitere erste Lage Verbundwerkstoff flächig und stoffschlüssig angeordnet ist.

In dieser Ausführungsform liegt die mindestens eine zweite Lage zwischen mindestens zwei ersten Lagen Verbundwerkstoff vor. Geeignete und bevorzugte textile Flächengebilde und Kunststoffe sind bereits zu der zweiten erfindungsgemäßen Lage Verbundwerkstoff genannt worden und gelten hier entsprechend.

In dieser Ausführungsform des erfindungsgemäßen Mehrschichtverbundwerkstoffes weist die mindestens eine zweite Lage im Allgemeinen eine Dicke von 200 bis 3000 $\mu$m, bevorzugt 200 bis 1500 $\mu$m, besonders bevorzugt 250 bis 1200 $\mu$m, ganz besonders bevorzugt 300 bis 1000 $\mu$m, auf.

Die mindestens eine dritte Lage des erfindungsgemäßen Mehrschichtverbundwerkstoffs weist im Allgemeinen einen Fasergehalt von 25 bis 55 Vol.-%, bevorzugt 35 bis 50, auf.

Erfindungsgemäß können die zweite Lage Verbundwerkstoff und dritte Lage Verbundwerkstoff gleich oder unterschiedlich sein. Bevorzugt sind diese in Bezug auf ihre Zusammensetzung, ihren Fasergehalt und ihre Schichtdicke im Wesentlichen gleich aufgebaut.

Gemäß einer besonderen Ausführungsform der Erfindung sind die in dem erfindungsgemäßen Mehrschichtverbundwerkstoff vorhandenen Lagen im Wesentlichen symmetrisch angeordnet, wobei weiter bevorzugt die vorliegenden ersten, zweiten und dritten Lagen innerhalb ihrer Gattung in Bezug auf mindestens ein Merkmal aus der Gruppe chemische Zusammensetzung, Faservolumen- bzw. Fasergehalt und Schichtdicke im Wesentlichen gleich aufgebaut sind.

Im Wesentlichen symmetrisch im Sinne der Erfindung bedeutet, dass die Verbundwerkstofflagen des Mehrschichtverbundwerkstoffs in Bezug auf eine, auf der Hälfte der durch die beiden außenliegenden Lagen Verbundwerkstoff nach außen begrenzten Dicke des Mehrschichtverbundwerkstoffs, parallel zu den Lagen Verbundwerkstoff verlaufenden Spiegelebene in Bezug auf mindestens ein Merkmal, vorzugsweise alle Merkmale, aus der Gruppe chemische Zusammensetzung, Faservolumen- bzw. Fasergehalt und Schichtdicke im Wesentlichen gleich aufgebaut sind.

Der erfindungsgemäße Mehrschichtverbundwerkstoff weist insgesamt einen Fasergehalt von im Allgemeinen 25 bis 55 Gew.-%, bevorzugt 35 bis 50 Gew.-%, auf.

Gemäß einer bevorzugten Ausführungsform der Erfindung weist der Mehrschichtverbundwerkstoff eine Gesamtdicke von 0,5 bis 2,5 mm, vorzugsweise 0,7 bis 2,0 mm, insbesondere 0,8 bis 1,5 mm auf. Praktische Versuche haben gezeigt, dass es mit dem erfindungsgemäßen Mehrschichtverbundwerkstoff möglich ist, selbst bei diesen geringen Dicken ausgesprochen gute mechanische Eigenschaften zu erzielen.

Dabei hat es sich als besonders vorteilhaft erwiesen, wenn die Summe aller innenliegenden ersten Lagen Verbundwerkstoff eine Gesamtdicke von 0,2 bis 2,0 mm, bevorzugt 0,3 bis 1,5 mm, besonders bevorzugt 0,5 bis 1,0 mm aufweist.

Vorteilhaft im Rahmen der Erfindung ist es ferner, wenn die Dicke jeder einzelnen der beiden außenliegenden zweiten bzw. dritten Lagen Verbundwerkstoff jeweils 50 bis 400 $\mu$m, bevorzugt, 100 $\mu$m bis 300 $\mu$m, besonders bevorzugt 120 $\mu$m bis 250 $\mu$m beträgt.

Gemäß einer weiteren besonderen Ausführungsform der Erfindung weisen die mindestens eine zweite Lage einen leicht erhöhten, beispielsweise einen 1 bis 5 Gew.-% höheren, Volumengehalt an Fasern, bezogen auf das Gesamtvolumen der Lage Verbundwerkstoff, auf als die mindestens eine erste Lage Verbundwerkstoff auf.

Unter Vol.-% wird hier der Volumenanteil (% v/v) bezogen auf das Gesamtvolumen der Lage Faserverbundwerkstoff verstanden.

Bevorzugt weisen die mindestens zwei Lagen Faserverbundwerkstoff des erfindungsgemäßen Mehrschichtverbundwerkstoffs im Wesentlichen keine Hohlräume, insbesondere im Wesentlichen keine Lufteinschlüsse, auf.

Im Wesentlichen keine Hohlräume bedeutet gemäß einer Ausführungsform, dass der Hohlraumgehalt der mindestens drei Lagen Faserverbundwerkstoff des erfindungsgemäßen Mehrschichtverbundwerkstoffs unter 5 Vol.-%, insbesondere unter 2 Vol.-%, besonders bevorzugt unter 1 Vol.-%, beträgt.

Die Ermittlung des Hohlraumgehalts einer Verbundwerkstofflage oder des Mehrschichtverbundwerkstoffs kann auf unterschiedlichen Wegen erfolgen, welche als allgemein anerkannt betrachtet werden. Beispielsweise kann der Hohlraumgehalt eines Prüfkörpers durch den Harz-Veraschungstest erfolgen, bei dem ein Probekörper in einem Ofen beispielsweise einer Temperatur von 600 °C für 3 Stunden ausgesetzt wird, um das Harz, welches die Fasern in dem Probekörper umschließt zu verbrennen. Die Masse der derart freigelegten Fasern kann dann ermittelt werden, um in einem weiteren kalkulatorischen Schritt auf den Hohlraumgehalt des Probekörpers zu schließen. Ein derartiger Harz-Veraschungstest kann in Anlehnung an die ASTM D 2584-08 durchgeführt werden, um die Einzelgewichte der Fasern und der Polymermatrix zu bestimmen. Hieraus kann in einem weiteren Schritt der Hohlraumgehalt des Probekörpers ermittelt werden, indem die nachfolgende Gleichung 1 genutzt wird:

$$V f = 100 * (\rho t - \rho c) / \rho t \qquad \text{(Gleichung 1)}$$

wobei

Vf      den Hohlraumgehalt der Probe in [%];
$\rho$c      die Dichte des Probekörpers, beispielsweise ermittelt durch Flüssig- oder Gaspyknometrie;
$\rho$t      die theoretische Dichte des Probekörpers ermittelt nach folgender Gleichung 2

$$\rho t = 1 / [Wf / \rho f + Wm / \rho m] \qquad \text{(Gleichung 2)}$$

$\rho$m      die Dichte der Polymermatrix (beispielsweise bei einer entsprechenden Kristallinität);
$\rho$f      die Dichte der verwendeten Fasern;
Wf      der Gewichtsanteil der verwendeten Fasern und
Wm     der Gewichtsanteil der Polymermatrix; sind.

Alternativ kann der Hohlraumgehalt durch chemisches Auflösen der Polymermatrix aus dem Probekörper heraus in Anlehnung an ASTM D 3171-09 erfolgen. Der Harz-Veraschungstest sowie die chemische Auflösungsmethode sind eher für Glasfasern geeignet, welche im Allgemeinen gegen schmelzen oder chemischer Behandlung inert sind. Weitere Methoden für sensitivere Fasern sind die indirekte Berechnung des Hohlraumgehalts über die Dichten des Polymers, der Fasern sowie des Probekörpers nach ASTM D 2734-09 (Methode A), wobei die Dichten nach ASTM D792-08 (Methode A) bestimmt werden können. Des Weiteren können auch bildverarbeitende Programme, Rasterschablonen oder das Auszählen der Fehlstellen zur Auswertung des Hohlraumgehalts einer Bildaufnahme, welche durch konventionelle Mikroskopie ermittelt wurde, herangezogen werden.

Ein weiterer Weg zur Bestimmung des Hohlraumgehalts ist die Dickendifferenzmethode, welche in der Ermittlung der Schichtdickendifferenz zwischen theoretischer Bauteildicke und der tatsächlichen Bauteildicke bei bekannten Flächengewichten und Dichten von Polymer sowie Faser besteht. Bei der Berechnung der theoretischen Bauteildicken wird davon ausgegangen, dass keine Hohlräume in dem Aufbau vorhanden sind und eine vollständige Benetzung der Fasern mit Polymer vorliegt. Der Bezug der Dickendifferenz auf die tatsächliche Bauteildicke ergibt den prozentualen Hohlraumgehalt. Die Messung der Dicken kann hierbei beispielsweise mit einer Bügelmessschraube erfolgen. Fehlerminimierte Ergebnisse lassen sich bei dieser Methode bevorzugt durch die Ermittlung des Hohlraumgehalts an Bauteilen bestehend aus mehreren Einzelschichten, bevorzugt mehr als 4 Schichten, besonders bevorzugt mehr als 6 Schichten und ganz besonders bevorzugt mehr als 8 Schichten, bestimmen.

Während die oben beschriebenen Verfahren bei Mittesten eines entsprechenden Standards zu vergleichbaren Ergebnissen führen, wurden die Hohlraumgehalte, wie hier beschrieben, mittels der Dickendifferenzmethode wie in den Beispielen angegeben durchgeführt.

Gegebenenfalls können sich erfindungsgemäß weitere Materiallagen zwischen der mindestens einen ersten Lage und der mindestens einen zweiten Lage, weiter bevorzugt zwischen allen benachbarten Lagen des erfindungsgemäßen Mehrschichtverbundwerkstoffes befinden. Beispielhaft seien hier weitere Lagen aus Kunststoff, der gleich oder verschieden von der in den Lagen verwendeten Kunststoffmatrix sein kann, genannt. Diese Kunststofflagen können insbesondere auch Füllstoffe, die von den erfindungsgemäß vorgesehenen Endlosfasern verschieden sind, enthalten. Ferner können auch Klebstoff-, Textiles Flächengebilde-, Vlies- oder Oberflächenvergütungslagen, beispielsweise Lackschichten im erfindungsgemäßen Mehrschichtverbundwerkstoff enthalten sein. Diese weiteren Lagen können zwischen innen- und außenliegenden Lagen, zwischen mehreren innenliegenden Lagen und/oder auf einer oder beiden der außenliegenden Lagen enthalten sein.

Die vorliegende Erfindung betrifft auch ein Teil für den Einsatz im Automobilbereich, insbesondere Sicht- und Strukturbauteile, beispielsweise eine Radkappe, in Gepäckstücken, beispielsweise in Koffern, als Verstärkungselemente in Bekleidung, beispielsweise Schuhsohlen, in elektronischen Geräten, beispielsweise Monitor, Tablet, Mobiltelefon oder Computer, insbesondere ein Laptop, oder Gehäuseteilen, welche geeignet sind für die Verwendung als oder den Einsatz in einem Gehäuse eines elektronischen Geräts, wobei die genannten Teile mindestens einen erfindungsgemäßen Mehrschichtverbundwerkstoff aufweisen.

Die vorliegende Erfindung betrifft auch die Verwendung eines erfindungsgemäßen Mehrschichtverbundwerkstoffs in einem Teil für den Einsatz im Automobilbereich, insbesondere in Sicht- und Strukturbauteilen, beispielsweise Radkappen, Mittelkonsolenverkleidung, Kopfstützen, Hutablagen, Türgriffe, Säulenverkleidung, Spoiler, Einstiegsleisten, Spiegelabdeckung, Kühlergrill oder Frontgrill, Lüfterlamellen, in Gepäckstücken, beispielsweise in Koffern, in Möbeln, beispielsweise in Stühlen, Tischen, Schränken, insbesondere für Möbel in Fahrzeugen, beispielsweise in Wohnmobilen oder Wohnwagen, in bzw. an Fahrrädern, beispielsweise an E-Fahrrädern, Rennrädern, Mountainbikes, Gravel-Bikes, City-Bikes, als strukturelle Bauteile an Fahrrädern, beispielsweise Rahmen, Gabel, Lenker, als Anbauteile, beispielsweise als Sattel, Sattelstütze, Aufnahmen, Federn, Kurbeln, sowie in Sportausrüstungen, beispielsweise für Hockey, Tennis, Fußball, Rugby, als Schläger, Helme, Schutzausrüstung, Schienbeinschoner, Armschoner, Ski, Skischuhe, Wakeboards, Surfboards, Paddel, Taucherflossen und allgemein als Verstärkungselemente in Bekleidung, beispielsweise Schuhsohlen, in elektronische Geräten, beispielsweise Drohnen, Monitoren, Tablets, Mobiltelefonen oder Computern, insbesondere in einem Laptop, oder in Gehäuseteilen, welche geeignet sind für die Verwendung als oder den Einsatz in einem Gehäuse eines elektronischen Geräts.

Die vorliegende Erfindung betrifft auch ein Verfahren zur Herstellung eines entsprechenden Teils unter Verwendung des erfindungsgemäßen Mehrschichtverbundwerkstoffes.

Zur Herstellung eines entsprechenden Teils, insbesondere eines Gehäuseteils, welches geeignet ist für die Verwendung als oder den Einsatz in einem Gehäuse eines elektronischen Geräts, werden bevorzugt die folgenden Schritte durchgeführt:

a) Bereitstellen eines erfindungsgemäßen Mehrschichtverbundwerkstoffs als Ausgangsmaterial,
b) Umformung und/oder Assemblierung mit weiteren Komponenten zum Teil, insbesondere zum Gehäuseteil.

Gehäuseteil im Sinne der Erfindung ist jedes Teil, welches für die Verwendung als oder den Einsatz in einem Gehäuse eines elektronischen Geräts (IT-Gehäuse) geeignet ist.

Beispielsweise kann ein Gehäuseteil im Sinne der Erfindung das Gehäuse einer Drohne, Rückseite eines Mobiltelefons, die Unterseite eines Laptops, die Monitorrückseite eines Laptops, die Rückseite eines Tablets, etc. darstellen oder aber auch nur Bestandteil einer Rückseite eines Mobiltelefons, einer Unterseite eines Laptops, einer Monitorrückseite eines Laptops, einer Rückseite eines Tablets, etc. sein.

Gemäß einer besonderen Ausführungsform stellt das Gehäuseteil die Monitorrückseite (sogenanntes "a-cover") oder die Unterseite eines Laptops (sogenanntes "d-cover") dar oder ist ein Bestandteil der Monitorrückseite oder der Unterseite eines Laptops.

Ein weiterer Vorteil des erfindungsgemäßen Mehrschichtverbundwerkstoffs ist, dass er in beliebige Formen umgeformt werden kann. Zur Umformung können alle dem Fachmann bekannten Umformungsverfahren eingesetzt werden. Solche Umformungsverfahren können unter Druck- und/oder Wärmeeinwirkung erfolgen.

Gemäß einer Ausführungsform des erfindungsgemäßen Verfahrens erfolgt die Umformung unter Wärmeeinwirkung, insbesondere durch Thermoformen.

Um als erfindungsgemäßes Teile verwendet zu werden oder in einem Gehäuse eines elektronischen Geräts eingesetzt zu werden, sollte der erfindungsgemäße Mehrschichtverbundwerkstoff einer punktuellen Belastung, wie sie beispielsweise beim Herunterfallen eines entsprechenden Teils oder dem unbeabsichtigten Drauftreten erzeugt wird, standhalten können. Die erfindungsgemäßen Mehrschichtverbundwerkstoffe weisen nicht nur ein überraschend metallähnliches Aussehen, metallähnlichen Klang und eine metallähnliche Haptik auf, sondern widerstehen auch besonders gut punktuellen Belastungen.

Dies macht sie insbesondere für den Einsatz in IT-Gehäusen besonders geeignet.

Überraschenderweise wurde gefunden, dass ein erfindungsgemäßer Mehrschichtverbundwerkstoff mit einer E-Modul Kombination in 0° Richtung von größer 50 GPa und einem E-Modul in 90° Richtung von größer 35 GPa, besonders gut die an ein Gehäuse eines elektronischen Geräts gestellten Anforderungen der punktuellen Belastbarkeit erfüllt. Bevorzugt weist ein erfindungsgemäßer Mehrschichtverbundwerkstoff eine E-Modul Kombination in 0° Richtung von größer 53 GPa und einem E-Modul in 90° Richtung von größer 38 GPa auf. Wie in den Ausführungsbeispielen veranschaulicht, kann man diese Auswahlregel v.a. durch Einstellung der relativen Schichtdicken im Mehrschichtverbundwerkstoff und/oder der Faservolumengehalte befolgen.

Im Nachfolgenden wird die Erfindung an Beispielen näher erläutert.

### Beispiele

Für die erfindungsgemäßen Versuche und die Vergleichsversuche wurden Mehrschichtverbundwerkstoffe mit folgendem Aufbau hergestellt:

Lagenaufbau 1:

    1 Lage Papier mit Silikonbeschichtung über
    1 Lage Kohlenstofffaser-Gewebe über
    4 Lagen Tape UD, jeweils in 0°-Ausrichtung über
    1 Lage Kohlenstofffaser-Gewebe über
    1 Lage Papier mit Silikonbeschichtung

Lagenaufbau 2:

    1 Lage Papier mit Silikonbeschichtung über
    1 Lage Kohlenstofffaser-Gewebe über
    2 Lagen Tape UD, jeweils in 0°-Ausrichtung über
    1 Lage Kohlenstofffaser-Gewebe über
    1 Lage Papier mit Silikonbeschichtung

Das eingesetzte Kohlenstofffaser-Gewebe wies eine Breite von ca. 476 mm auf. Das eingesetzte Tape DU enthielt Kohlenstofffasern mit etwa 23 Vol.-% und wies ein Flächengewicht von etwa 450 g/m$^2$ auf. Als Polycarbonat lag Makrolon® 2408 der Covestro Deutschland AG, ein aromatisches Polycarbonat auf Basis von Bisphenol A mit einer MVR von 19 cm$^3$/(10 min), bestimmt bei 300 °C und 1,2 kg gemäß DIN ISO 1133:2012-03, enthaltend 0,3 Gew.-% Pentaerythrittetrastearat als Entformungsmittel, vor. Das Massenmittel der Molmasse $M_w$ von Makrolon® 2408 beträgt etwa 24 kg/mol, messbar durch Gelpermeationschromatographie. Die Viskosität liegt bei etwa 500 Pa·s, gemessen bei 280 °C Polymertemperatur und einer Scherrate von etwa 50 1/s. Die Viskosität kann mit einem Hochdruckkapillarrheometer ermittelt werden.

Die einzelnen Lagen gemäß den oben genannten Lagenaufbauten 1 oder 2 wurden entsprechend übereinander gelegt und das so erhaltene Halbzeug in die Presse eingelegt. Die einzelnen Verfahrensmerkmale und die erzielten Ergebnisse sind in den Tabellen 1, 2 und 3 dargestellt.

Dabei bedeuten T die Temperatur der Heißzone in der Presse, p den Prozessdruck, der am Pressgut anliegt. Die "Presszeit insgesamt" ergibt sich im Wesentlichen aus der Anzahl der Pressschritte in der Heißzone multipliziert mit der Presszeit, der Hub bedeutet die entsprechende Länge, um die das Halbzeug zwischen den einzelnen Pressungen vorgeschoben wird und die Vorschubgeschwindigkeit ergibt sich aus der Presszeit und der Anzahl der Hübe.

**Tabelle 1:**

| Nr. | Lagenaufbau | T [°C] | p [bar(a)] | Presszeit insgesamt [s] | Hub [mm] | Häufigkeit in der Heißzone [Mal] | Presszeit [s] | Vorschubgeschwindigkeit [m/h] | erhaltenes Produkt [i.O./n.i.O] |
|---|---|---|---|---|---|---|---|---|---|
| V1 | 1 | 230 | 10 | 100 | 25 | 20 | 5 | 11,8 | n.i.O. |
| V2 | 1 | 230 | 10 | 200 | 12,5 | 40 | 5 | 6,2 | n.i.O. |
| V3 | 1 | 250 | 10 | 100 | 25 | 20 | 5 | 11,8 | n.i.O. |
| V4 | 1 | 250 | 10 | 200 | 12,5 | 40 | 5 | 6,2 | n.i.O. |
| V5 | 1 | 270 | 10 | 100 | 25 | 20 | 5 | 11,8 | n.i.O. |
| 6 | 1 | 270 | 10 | 200 | 12,5 | 40 | 5 | 6,2 | i.O. |
| 7 | 1 | 290 | 10 | 100 | 25 | 20 | 5 | 11,8 | i.O. |
| 8 | 1 | 290 | 10 | 200 | 12,5 | 40 | 5 | 6,2 | i.O. |
| 9 | 1 | 290 | 10 | 70 | 35 | 14 | 5 | 16,2 | i.O. |

V Vergleichsversuch
i.O. in Ordnung, d.h. das Produkt weist keine Löcher, keine herausstehenden Fasem und keine Unregelmäßigkeiten auf der Oberfläche auf, sondern das gesamte Gewebe ist mit Polycarbonat imprägniert
n.i.O. nicht in Ordnung, d.h. das Produkt weist Löcher, herausstehende Fasem und/oder Unregelmäßigkeiten auf der Oberfläche auf, und nicht das gesamte Gewebe ist mit Polycarbonat imprägniert

**Tabelle 2:**

| Nr. | Lagenaufbau | T [°C] | p [bar (a)] | Presszeit insgesamt [s] | Hub [mm] | Häufigkeit in der Heißzone [Mal] | Presszeit [s] | Vorschubgeschwindigkeit [m/h] | erhaltenes Produkt [i.O./n.i.O] |
|---|---|---|---|---|---|---|---|---|---|
| V10 | 2 | 270 | 10 | 100 | 25 | 20 | 5 | 11,8 | n.i.O. |
| 11 | 2 | 270 | 10 | 200 | 12,5 | 40 | 5 | 6,2 | i.O. |
| 12 | 2 | 280 | 10 | 100 | 25 | 20 | 5 | 11,8 | i.O. |
| 13 | 2 | 280 | 10 | 200 | 12,5 | 40 | 5 | 6,2 | i.O. |
| 14 | 2 | 290 | 10 | 100 | 25 | 20 | 5 | 11,8 | i.O. |
| 15 | 2 | 290 | 10 | 200 | 12,5 | 40 | 5 | 6,2 | i.O. |

V Vergleichsversuch i.O. in Ordnung, d.h. das Produkt weist keine Löcher, keine herausstehenden Fasern und keine Unregelmäßigkeiten auf der Oberfläche auf, sondern das gesamte Gewebe ist mit Polycarbonat imprägniert n.i.O. nicht in Ordnung, d.h. das Produkt weist Löcher, herausstehende Fasern und/oder Unregelmäßigkeiten auf der Oberfläche auf, und nicht das gesamte Gewebe ist mit Polycarbonat imprägniert

**Tabelle 3:**

| Nr. | Lagenaufbau | T [°C] | p [bar (a)] | Presszeit insgesamt [s] | Hub [mm] | Häufigkeit in der Heißzone [Mal] | Presszeit [s] | Vorschubgeschwindigkeit [m/h] | erhaltenes Produkt [i.O./n.i.O] |
|---|---|---|---|---|---|---|---|---|---|
| V16 | 2 | 290 | 10 | 70 | 35 | 14 | 5 | 16,2 | n.i.O. |
| 17 | 2 | 290 | 10 | 100 | 25 | 20 | 5 | 11,8 | i.O. |
| 18 | 2 | 290 | 10 | 200 | 12,5 | 40 | 5 | 6,2 | i.O. |

V Vergleichsversuch i.O. in Ordnung, d.h. das Produkt weist keine Löcher, keine herausstehenden Fasern und keine Unregelmäßigkeiten auf der Oberfläche auf, sondern das gesamte Gewebe ist mit Polycarbonat imprägniert n.i.O. nicht in Ordnung, d.h. das Produkt weist Löcher, herausstehende Fasern und/oder Unregelmäßigkeiten auf der Oberfläche auf, und nicht das gesamte Gewebe ist mit Polycarbonat imprägniert

**Patentansprüche**

1. Verfahren zur Herstellung eines Mehrschichtverbundwerkstoffes enthaltend mindestens zwei flächig und stoffschlüssig übereinander liegende Lagen Verbundwerkstoff, wobei die mindestens eine erste Lage Verbundwerkstoff Endlosfasern enthält, wobei die Endlosfasern innerhalb dieser mindestens einen Lage unidirektional ausgerichtet sind und in einem auf Homopolycarbonat und/oder Copolycarbonat basierenden Kunststoff eingebettet sind, und die mindestens eine zweite Lage Verbundwerkstoff ein textiles Flächengebilde enthält, wobei das textile Flächengebilde in einem auf Homopolycarbonat und/oder Copolycarbonat basierenden Kunststoff eingebettet ist, mindestens umfassend die folgenden Schritte:

   (A) Bereitstellen mindestens einer ersten Lage Verbundwerkstoff enthaltend Endlosfasern, wobei die Endlosfasern innerhalb dieser mindestens einen ersten Lage unidirektional ausgerichtet sind und in einem auf Homopolycarbonat und/oder Copolycarbonat basierenden Kunststoff eingebettet sind, wobei der Faservolumenanteil der mindestens einen ersten Lage Verbundwerkstoff 10 bis 45 Vol.-% beträgt,
   (B) flächiges Aufbringen mindestens eines textilen Flächengebildes auf die mindestens eine erste Lage Verbundwerkstoff aus Schritt (A), um ein Halbzeug enthaltend mindestens eine erste Lage Verbundwerkstoff und mindestens ein Textiles Flächengebilde zu erhalten, und
   (C) Verpressen des Halbzeugs aus Schritt (B) bei einem Druck von 2 bis 40 bar(a), einer Temperatur T von 220 bis 320 °C für eine Zeit von 30 bis 600 s, um den Mehrschichtverbundwerkstoff mit einem Faservolumenanteil von 25 bis 55 Vol.-% zu erhalten.

2. Verfahren gemäß Anspruch 1, **dadurch gekennzeichnet, dass** vor Schritt (C) an den Außenseiten des Halbzeugs jeweils mindestens ein Trennfilm, mindestens eine Trennschicht, mindestens ein Trenngewebe oder eine Kombination von zwei oder mehreren davon flächig aufgebracht wird.

3. Verfahren nach Anspruch 1 oder 2, **dadurch gekennzeichnet, dass** in Schritt (B) auf der Oberseite und auf der Unterseite der mindestens einen ersten Lage Verbundwerkstoff jeweils ein textiles Flächengebilde flächig aufgebracht wird.

4. Verfahren nach einem der Ansprüche 1 bis 3, **dadurch gekennzeichnet, dass** in Schritt (A) zwei erste Lagen Verbundwerkstoff flächig aufeinander gelegt werden, wobei die unidirektional orientierten Endlosfasern der beiden Lagen bevorzugt in einem Winkel von 30 bis 130° gegeneinander rotiert sind.

5. Verfahren nach einem der Ansprüche 1 bis 4, **dadurch gekennzeichnet, dass** die mindestens eine erste Lage Verbundwerkstoff enthaltend Endlosfasern eine Dicke von 0,03 bis 1 mm aufweist, und das mindestens eine textile Flächengebilde eine Dicke von 0,03 bis 1 mm aufweist.

6. Verfahren nach einem der Ansprüche 1 bis 5, **dadurch gekennzeichnet, dass** Schritt (C) bei einem Druck von 3 bis 30 bar(a), bevorzugt 5 bis 20 bar(a), erfolgt.

7. Verfahren nach einem der Ansprüche 1 bis 6, **dadurch gekennzeichnet, dass** Schritt (C) bei einer Temperatur T von 240 bis 300 °C, bevorzugt 270 bis 290 °C, erfolgt.

8. Verfahren nach einem der Ansprüche 1 bis 7, **dadurch gekennzeichnet, dass** Schritt (C) für eine Zeit von 30 bis 300 s, bevorzugt 80 bis 220 s, erfolgt.

9. Mehrschichtverbundwerkstoff, herstellbar nach dem Verfahren gemäß einem der Ansprüche 1 bis 8.

10. Mehrschichtverbundwerkstoff enthaltend mindestens zwei flächig und stoffschlüssig übereinander liegende Lagen Verbundwerkstoff, wobei die mindestens eine erste Lage Verbundwerkstoff Endlosfasern enthält, wobei die Endlosfasern innerhalb dieser mindestens einen Lage unidirektional ausgerichtet sind und in einem auf Homopolycarbonat und/oder Copolycarbonat basierenden Kunststoff eingebettet sind, und die mindestens eine zweite Lage Verbundwerkstoff ein textiles Flächengebilde enthält, wobei das textile Flächengebilde in einem auf Homopolycarbonat und/oder Copolycarbonat basierenden Kunststoff eingebettet ist.

11. Mehrschichtverbundwerkstoff gemäß Anspruch 10, **dadurch gekennzeichnet, dass** die mindestens eine erste Lage Verbundwerkstoff über der mindestens einen zweiten Lage Verbundwerkstoff flächig und stoffschlüssig angeordnet ist und auf der mindestens einen ersten Lage Verbundwerkstoff mindestens eine dritte Lage Verbundwerkstoff flächig und stoffschlüssig angeordnet ist, und die mindestens eine dritte Lage Verbundwerkstoff ein textiles Flächengebilde enthält, wobei das textile Flächengebilde in einem auf Homopolycarbonat und/oder Copolycarbonat basierenden Kunststoff eingebettet ist.

12. Teil für den Einsatz im Automobilbereich, in Gepäckstücken, in Möbeln, in bzw. an Fahrrädern, in Sportausrüstungen, als Verstärkungselemente in Bekleidung, in elektronische Geräten oder in Gehäuseteilen, welche geeignet sind für die Verwendung als oder den Einsatz in einem Gehäuse eines elektronischen Geräts, wobei die genannten Teile mindestens einen Mehrschichtverbundwerkstoff nach einem der Ansprüche 9 bis 11 aufweisen.

13. Verwendung eines Mehrschichtverbundwerkstoffs nach einem der Ansprüche 9 bis 11 in einem Teil für den Einsatz im Automobilbereich, in Gepäckstücken, in Möbeln, in bzw. an Fahrrädern, in Sportausrüstungen, als Verstärkungselemente in Bekleidung, in elektronische Geräten oder in Gehäuseteilen, welche geeignet sind für die Verwendung als oder den Einsatz in einem Gehäuse eines elektronischen Geräts.

14. Verfahren zur Herstellung eines Teils nach Anspruch 12 unter Verwendung eins Mehrschichtverbundwerkstoffes nach einem der Ansprüche 9 bis 11.

**Europäisches Patentamt**
**European Patent Office**
**Office européen des brevets**

# EUROPÄISCHER RECHERCHENBERICHT

Nummer der Anmeldung

EP 19 20 2933

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 4 992 127 A (KISHI SATORU [JP] ET AL) 12. Februar 1991 (1991-02-12) | 1,3-14 | INV. B29C70/20 B29C70/22 B29C70/50 B32B5/26 B32B5/28 |
| Y | * Spalte 6, Zeilen 5-12, 22-29 * * Spalte 7, Zeilen 15-25, 37-45 * * Tabelle 1 * * Beispiel 1 * * Ansprüche 1, 2 * | 2 | |
| Y | EP 2 090 423 A1 (FUKUI PREFECTURAL GOVERNMENT [JP]) 19. August 2009 (2009-08-19) * Absätze [0171], [0186] * | 2 | |
| X | WO 2013/127419 A1 (DAIMLER AG [DE]) 6. September 2013 (2013-09-06) * Abbildung 1 * * Seite 4, 3. Absatz * * Seite 5, 5. Absatz * * Seite 12, 5. und 7. Absätze * | 1,3-14 | |

RECHERCHIERTE SACHGEBIETE (IPC)

B29C
B32B
C08J
B29K

Der vorliegende Recherchenbericht wurde für alle Patentansprüche erstellt

| Recherchenort | Abschlußdatum der Recherche | Prüfer |
|---|---|---|
| Den Haag | 7. April 2020 | Gasner, Benoit |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

&: Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 19 20 2933

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

07-04-2020

| Im Recherchenbericht angeführtes Patentdokument | | | Datum der Veröffentlichung | Mitglied(er) der Patentfamilie | | | Datum der Veröffentlichung |
|---|---|---|---|---|---|---|---|
| US | 4992127 | A | 12-02-1991 | CA | 1328398 | C | 12-04-1994 |
| | | | | JP | H01289837 | A | 21-11-1989 |
| | | | | US | 4992127 | A | 12-02-1991 |
| EP | 2090423 | A1 | 19-08-2009 | BR | PI0716399 | A2 | 17-09-2013 |
| | | | | CA | 2658572 | A1 | 29-05-2008 |
| | | | | CN | 101466535 | A | 24-06-2009 |
| | | | | CN | 102815062 | A | 12-12-2012 |
| | | | | EP | 2090423 | A1 | 19-08-2009 |
| | | | | KR | 20090091104 | A | 26-08-2009 |
| | | | | KR | 20130009887 | A | 23-01-2013 |
| | | | | KR | 20130009888 | A | 23-01-2013 |
| | | | | KR | 20130045908 | A | 06-05-2013 |
| | | | | US | 2010215887 | A1 | 26-08-2010 |
| | | | | US | 2012270009 | A1 | 25-10-2012 |
| | | | | US | 2012270030 | A1 | 25-10-2012 |
| | | | | WO | 2008062818 | A1 | 29-05-2008 |
| WO | 2013127419 | A1 | 06-09-2013 | DE | 102012004109 | A1 | 05-09-2013 |
| | | | | EP | 2819841 | A1 | 07-01-2015 |
| | | | | WO | 2013127419 | A1 | 06-09-2013 |

Für nähere Einzelheiten zu diesem Anhang : siehe Amtsblatt des Europäischen Patentamts, Nr.12/82

EPO FORM P0461

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2013098224 A1
- DE 102012200059 A1
- DE 102011005462 B3
- US 3028635 A
- US 2999825 A
- US 3148172 A
- US 2991273 A
- US 3271367 A
- US 4982014 A
- US 2999846 A
- DE 1570703 A
- DE 2063050 A
- DE 2036052 A
- DE 2211956 A
- DE 3832396 A
- FR 1561518 A
- JP 620391986 A
- JP 620401986 A
- JP 1055501986 A
- US 3419634 A
- US 3189662 A
- EP 0122535 A
- US 5227449 A
- DE 3334782 A
- EP 0839623 A
- WO 9615102 A
- EP 0500496 A
- EP 2788408 A1

**In der Beschreibung aufgeführte Nicht-Patentliteratur**

- **SCHNELL.** Chemistry and Physics of Polycarbonates, Polymer Reviews. Interscience Publishers, 1964, vol. 9
- **D. FREITAG ; U. GRIGO ; P.R. MÜLLER ; H. NOUVERTNÉ ; BAYER AG.** Polycarbonates in Encyclopedia of Polymer Science and Engineering. 1988, vol. 11, 648-718
- Polycarbonate, Polyacetale, Polyester, Celluloseester. **U. GRIGO ; K. KIRCHNER ; P.R. MÜLLER.** Polycarbonate in Becker Braun, Kunststoff-Handbuch. Carl Hanser Verlag, 1992, vol. 31, 177-299
- **HANS ZWEIFEL.** Plastics Additives Handbook. Hanser Verlag